# EUROPEAN PATENT APPLICATION

(11) **EP 1 776 932 A2**
(43) Date of publication of application: **25.04.2007**
(21) Application number: 06425690.2
(22) Date of filing: 09.10.2006
(51) Int. Cl.: A61C 8/00

(54) **Submerged or transmucosal endosseous oral implant**

(30) Priority: 20.10.2005 IT SS20050007
(71) Applicant: Azaro, Franco, 07021 Arzachena (SS) (IT)
(72) Inventor: Azaro, Franco, 07021 Arzachena (SS) (IT)
(74) Representative: Iannone, Carlo Luigi

(57) **Abstract**

The present invention relates to a submerged or transmucosal endosseous oral implant (100) that can be introduced in an implant site (10), a prosthetic stump (100) being coupable with said implant by coupling means (12, 13), said implant (100) being comprised of a head (1) and a body (3), and being characterised in that said head (1) has a convex lateral profile, suitable to reduce compression stress of the spongy or medullar bone zone; and in that said body (3) has a plurality of cavities (7) on the lateral surface, suitable to permit generation of bone inside said cavities, thus promoting osteo-integration of implant (1).

## Description

The present invention relates to a submerged or transmucosal endosseous oral implant.

More specifically, the invention concerns an implant of the above kind comprised of a head and of a cylindrical - conical profiled body with a threaded portion and with variable circular geometry cavities, with three incisions on the conical part at 120° each other.

As it is well known, implant presently known have a cylindrically shaped head and a flared geometry sub-neck and a cylindrical or conical body simply with a metric pitch threading.

These implants have the drawback, starting from the head, o an easy resorption of the bone in the cortical zone, and extrusion toward spongy or medullar bone zone that can cause failure of introduction of implant.

In view of the above, the present invention aims to provide a solution obviating the above-mentioned drawback.

These and other results are obtained according to the invention by an implant reducing possibility or resorption of bone in the head zone, reducing the extrusive force of the implant from the cortical bone part toward the most fragile part of the spongy or medullar bone, thus limiting traumas due to these drawbacks.

Furthermore, solution suggested according to the present invention permits increasing, by the helicoidal shape of turns, which are frusto-conical at the base and by cavities, contact surface between bone and implant (osteo-integration), thus reducing healing time.

These and other results are obtained, according to the present invention, by an implant providing a head, with a convex profile, having an ovoidal geometry, a threaded cylindrical - conical profiled body and a series of cavities with variable geometry, rationally placed and realised on the smooth part of the implant body between a turn and the adjacent one.

It is therefore specific object of the present invention a submerged or transmucosal endosseous oral implant that can be introduced in an implant site, a prosthetic stump being coupable with said implant by coupling means, said implant being comprised of a head and a body, and being characterised in that said head has a convex lateral profile, suitable to reduce compression stress of the spongy or medullar bone zone; and in that said body has a plurality of cavities on the lateral surface, suitable to permit generation of bone inside said cavities, thus promoting osteo-integration of implant.

Always according to the invention, said head can have an ovoidal geometry and can have a diameter wider than the body.

Still according to the invention, said head can comprise a inclined plane, suitable to couple with a corresponding plane of said prosthetic stump, so as to prevent infiltration of liquids, inclination angle of said plane with respect to the symmetry axis of said implant being within the range between 30° and 60°, preferably 45°.

Advantageously, according to the invention, said body can have a threading.

Furthermore, according to the invention said body can comprise three incisions, substantially spaced 120° each other, realised according to a radial direction with respect to the horizontal axis, in the conical part of the implant, longitudinally with respect to the threaded part of the body.

Always according to the invention, said body can comprise a first and a second portion, said first portion having a cylindrical shape and said second portion having a conical shape, said second portion promoting introduction of implant in zones of the underlying bone which are particularly narrow and delicate.

Still according to the invention, said body can provide a surface treatment for promoting a better osteo-integration of the smooth part of the same body.

Advantageously, according to the invention, said implant can be introduced within said implant site by a submerged or transmucosal mode.

Furthermore, according to the invention, said head can comprise a plurality of circular incisions, said circular incisions stimulating growing of cortical portion and preventing growing of bacterial flora and its passage from the upper surface of the same cortical (medullar) part to the spongy part of the bone, i.e. medullar part, conferring a better stability of said implant.

Always according to the invention, said implant can comprise an acetabulum having a first and a second portion, said acetabulum permitting coupling with said coupling means.

Still according to the invention, said coupling means can comprise a pin that can be coupled in said first portion, said coupling means comprising a screw that can be introduced between said prosthetic stump and said implant, passing through said pin.

Preferably, according to the invention, said first portion of said acetabulum can have a triangular or hexagonal or octagonal section and said second acetabulum portion can have a conical shape.

Advantageously, according to the invention, said second portion can have an inclination between 1.75° and 3° with respect to the vertical axis of said implant, so as to make it easier positioning of the same implant and of the prosthetic parts.

Furthermore, according to the invention, said implant can receive different kinds of prosthetic parts, straight stumps, inclined stumps, with passing through tightening screw, straight and inclined stumps, with direct screw and straight or inclined stumps to be cemented.

The present invention will be now described, for illustrative but not limitative purposes, according to its preferred embodiments, with particular reference to the figures of the enclosed drawings, wherein:

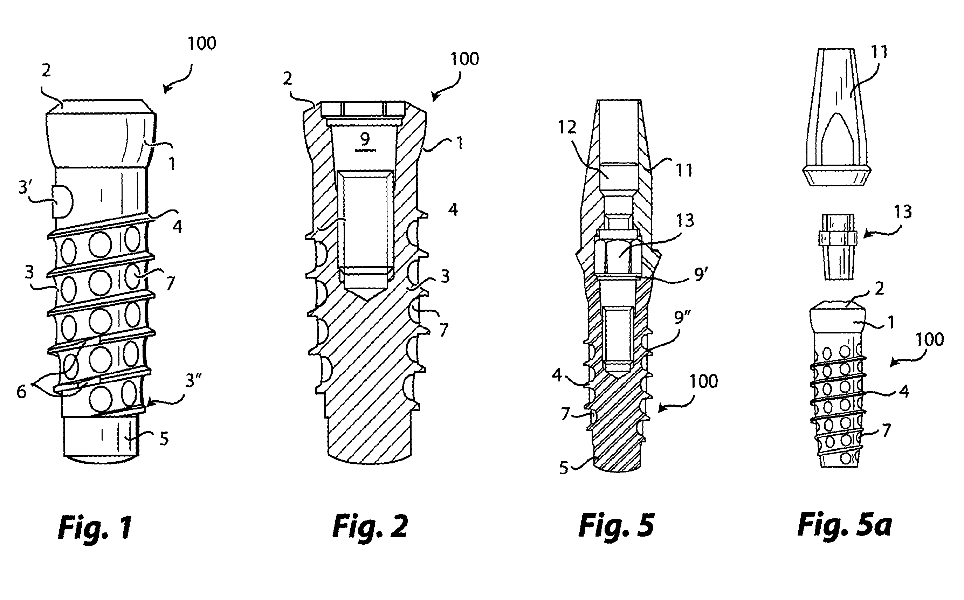

figure 1 is a front elevation view of the implant according to the invention;
figure 2 is a longitudinal section view taken along line II-II of figure 1;
figure 3 is a front view of implant according to the invention within the jawbone;
figure 4 is a front view of the implant according to the invention within the jawbone in a second position;
figure 5 shows a section view of implant according to the invention, showing the inclined plane of the head and the shape of acetabulum within the implant;
figure 5a shows an exploded section view of the implant according to figure 5;
figure 6 is a lateral view of implant of figure 1; and
figure 7 is a section view of implant of figure 6.

Observing figures of the enclosed drawings, it is described a preferred embodiment of the implant according to the invention, generically indicated by reference number 100.

Implant 100 can be introduced within jawbone. Then a first prosthesis will be installed on said implant, on which will be then installed the dental prosthesis.

Said implant 100 provides a head 1 and a body 3, with a inclined plane 2, having an inclination between 30° and 45° with respect to vertical axis, ensuring a perfect sealing between prosthetic part and implant 100. remaining part of head 1 is characterised by a particular convex profile with an ovoidal geometry, having a diameter larger than implant 100 body, but identical to diameter of threading 4 turns, realised in the underlying cylindrical-conical body 3.

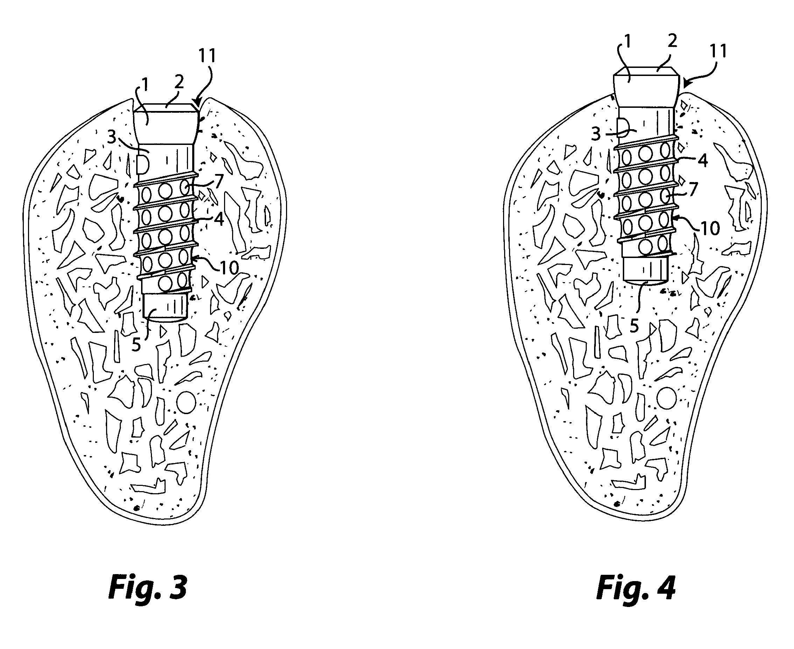

Height is designed and realised so as to fulfil the so called biological surface and guides operator for levelling implant within implant site 10 both for intra and transmucosal introduction of implant (see particularly figures 3 and 4).

In both cases of introduction, head 1 will be perfectly abutting in pit suitably obtained in the most compact cortical bone. In case of submerged implant (figure 3), upper part of the head will have to be under the peak edge of about 0.3 - 0.5 mm and in case of transmucosal implant (figure 4) it will have to project from the cortical edge for about the half of the same, thus reaching the upper part of the gingival mucous.

In the last case, it is not necessary using a closure screw, but simply an anatomical healing screw (see figure 4), thus requiring a fewer number of surgical passages and a better aesthetical appearance.

Particular geometry of head 1 with respect to other king of heads, on the basis of analyses carried out while designing the inventive implant and in the following *in vitro* tests, limits, and in some cases does not permit possible bone resorption, both during post-surgical healing phase and during the life of the implant.

During the surgical phase it is even possible having a bone growth up to covering the lateral part of the closure screw in case the submerged technique is employed.

In this specific case, it will be necessary levelling of the bone.

Further peculiar feature obtained by the innovative shape of the head has been confirmed by laboratory tests, during which some prototypes have been subjected to occlusal loads of implant 100. These tests have confirmed what expected, i.e. that, once head 1 is introduced in the implant pit, a balancing of forces is obtained with an annular distribution mainly on the more robust part of the cortical bone. In this case, compression stress is reduced on the spongy or medullary bone zone.

Furthermore, it is prevented or limited extrusion toward weaker part of the bone due to masticatory loading, thus conferring to the implant a better primary stability, both during the post-surgical healing phase and during its normal useful life.

Body 3 of implant 100 has a cylindrical - conical profile, with a helicoidal threading 4, tapered on its basis, and a pitch between 1.20 and 1.50 mm according to the use and on the basis of the bone present before the surgical phase.

Threading 4 starts from zero, beginning at about 1 mm from lower portion of implant 100 head 1, growing then in width all along the cylindrical part, and beginning reducing its dimensions at the beginning of the conical part 3" of implant 100 body 3, returning at zero at about 1 mm from base 5.

Conical shape 3" of body 3 and of threading 4 promotes introduction of implant 100 also in underlying bone zones that are very narrow and in zones where sinus lifting technique is applied by direct techniques, which are not injurious and at the same time give a stable support. Particularly, cylindrical - conical shape of body 3 confers a better primary stability of implant 100 installed under it in very delicate positions, e.g. when nerves are present.

Three longitudinal incisions 6 have been realised in the longitudinal conical part 3" of implant 100 body 3, provided at 120° each other, radically with respect to horizontal axis, crossing threading 4 turns, said incisions having self-threading, anti-rotation and liquid and bone residuals draining functions during surgical phase if pre-tapping is not provided.

Cavities 7 realised in implant 100 body 3, and having a suitably calculated variable geometry, have been rationally realised and distributed on the radial part of implant body. First, they have been designed for receiving liquids and bone residuals during surgical phase, lacking said pre-tapping, thus reducing occlusal compression. They further have the object of increasing osteo-integration surface. Consequently, they should contribute, along with helicoidal turns of threading that are tapered at their base, to a better primary stabilisation of the implant 100 in the most delicate zone of the spongy or medullary bone.

While realising prototypes of implant according to the invention, after having tested the same, it has been noted that cavities with a rationally designed geometry, realised on the suitably pure titan implant body, are intrinsically able to accept generation of bone inside them, without adding morfo-genetical proteins, such as osseo-lapatite and like.

This important discover permits underlying that by the implant according to the invention it will be possible obtaining a quicker healing and osteo-integration of the whole implant body 100, as well as a contact surface between spongy bone and implant 100 conferring to the system an important and different primary stability with respect to other implant systems, thus also reducing healing time and also economical advantages.

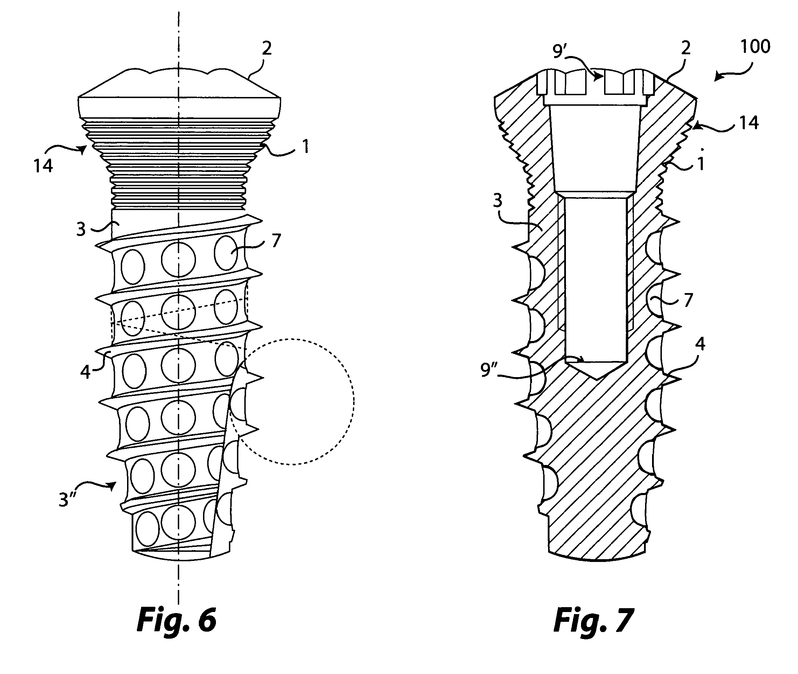

Making reference to figures 5 and 5a, it is observed implant 100 comprising 1 n acetabulum 9. the shape of said acetabulum was designed to receive three different types of prosthetic stumps 11, respectively stumps with through screw 12, stumps with direct screw and stumps with cemented pin 13.

From the figures it is observed the pin 13 that can be inserted between prosthetic stump 11 and implant 100, to which it is cemented or otherwise coupled, by through screw 12,as it can be noted from figure 5a.

Upper section 9' of acetabulum 9 can have triangular, hexagonal, octagonal section on the upper part of implant 100, while the lower part 9" has a conical shape, with an inclination between 1.75° and 3° with respect to vertical axis, in order to make implant and prosthetic parts positioning easier, for realising superstructures and also having a stumps anti-rotation function, i.e. preventing unscrewing of tightening screws.

In the zone under the conical part it is possible realising a threaded or not threaded dead hole, having the following functions:
A. receiving through screw 13 for tightening transfer element and calcinable element during working with dental technician laboratory;
B. receiving threaded part of full stump 11 (i.e. direct stump);
C. receiving conical part and full pin of cementable stump 11.

Combination between acetabulum 9 geometries and functions permits distinguishing it from other type of implants, since, particular inclined shape (preferably 45°) of implant 100 head according to the invention, contiguous to the same acetabulum 9, ensures a perfect sealing between prosthetic part and implant, conferring to the same a better resistance to transverse failure and to chipping of head and neck due to too high occlusal loadings. Moreover, said coupling between implant 100 and stump 11, occurring through said inclined plane 2, prevents liquid infiltration.

Implant 100 according to the invention is subjected to a surface treatment 3'. Although not included in the essential features of implant 100, treatment, along with the above described features, contributes to a better osteo-integration in the smooth part of the body, of cavities and of threading 4, thus increasing, along with other components, primary stability of the same.

Implant 100 according to the invention, in view of particular geometry of head and body, contrary to other implants, can be inserted on the peak edge of cortical portion (submerged method) and also with a portion of heed outside cortical portion (aesthetical transmucosal) (see particularly figure 4).

In case of submerged implant (figure 3) it will have to be introduced with head 1 built in within surgical pit realised in cortical portion at a depth of about 0.03 mm under the peak surface. This solution prevents that, during the stabilisation phase following the surgical intervention, a resorption of bone crest occurs, the latter growing exceeding radically along perimeter of the implant head thus filling space between upper base of the head and gingival mucous. Particular profile of implant head should limit possible resorption mentioned in the above.

In case transmucosal method is used, implant 100 head 1 will be partially built in within surgical pit suitably realised in cortical portion and the remaining part is outside the outer edge of gingival mucous. By this method, it is not necessary providing plug screw, and healing screw is directly applied, passing directly to realisation of prosthesis, thus reducing surgical phases.

Implant 100 according to the invention also permits receiving different kind of prosthetic parts, straight stumps 11, inclined stumps 11, with passing through tightening screw 13, straight and inclined stumps 11, with direct screw 13 and straight or inclined stumps 11 to be cemented.

Making now reference to figures 6 and 7, it is possible observing a further embodiment of the present invention.

First, it is possible observing in greater detail the cylindrical - conical shape of the body 3. further, it is possible noting circular incisions 14 on head 1. Said incisions, besides stimulating growing of cortical portion, eventually prevent growing of bacterial flora and its passage from upper cortical surface (medullar surface) to the spongy part of the bone (medullary part). Further, once cortical portion grows, along smooth surface and within said circular incisions 14, confers a better primary stability to implant 100.

Circular incisions 14 thus permit obtaining both a larger osteo-integration surface and a better bone creation without surface treatment.

From the above it is understood that one of the peculiar features of the invention is provision of holes or cavities 7 obtained on the lateral surface of the part of implant that can be introduced within jawbone.

This feature permits a better osteo-integration. In other words, bone quickly grows within said cavities or holes, permitting a better and quicker coupling of the same implant on the jawbone.

In the embodiment shown in the enclosed figures it is also provided a threading.

Another peculiar feature of the implant according to the invention is a rounded shape of the implant 100 neck.

This feature permits obtaining a quicker osteo-integration since, permits discharging laterally perpendicular force due to mastication. Thus, osteo-integration time is lower than that for other prosthesis.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Submerged or transmucosal endosseous oral implant (100) that can be introduced in an implant site (10), a prosthetic stump (100) being coupable with said implant by coupling means (12, 13), said implant (100) being comprised of a head (1) and a body (3), and being **characterised in that** said head (1) has a convex lateral profile, suitable to reduce compression stress of the spongy or medullar bone zone; and **in that** said body (3) has a plurality of cavities (7) on the lateral surface, suitable to permit generation of bone inside said cavities, thus promoting osteo-integration of implant (1).

2. Implant (100) according to claim 1, **characterised in that** said head (1) has an ovoidal geometry.

3. Implant (100) according to one of claims 1 or 2, **characterised in that** diameter of said head (1) is wider than the body (3).

4. Implant (100) according to one of the preceding claims, **characterised in that** said head (1) comprises a inclined plane (2), suitable to couple with a corresponding plane of said prosthetic stump (11), so as to prevent infiltration of liquids.

5. Implant (100) according to claim 4, **characterised in that** inclination angle of said plane with respect to the symmetry axis of said implant is within the range between 30° and 60°, preferably 45°.

6. Implant (100) according to one of the preceding claims, **characterised in that** said body (3) has a threading (4).

7. Implant (100) according to one of the preceding claims, **characterised in that** said body (3) comprises three incisions (6), substantially spaced 120° each other, realised according to a radial direction with respect to the horizontal axis, in the conical part of the implant, longitudinally with respect to the threaded part of the body (3).

8. Implant (100) according to one of the preceding claims, **characterised in that** said body (3) comprises a first and a second (3") portion, said first portion having a cylindrical shape and said second portion (3") having a conical shape, said second portion promoting introduction of implant (100) in zones of the underlying bone which are particularly narrow and delicate.

9. Implant (100) according to one of the preceding claims, **characterised in that** said body (3) provides a surface treatment (3') for promoting a better osteo-integration of the smooth part of the same body (3).

10. Implant (100) according to one of the preceding claims, **characterised in that** it can be introduced within said implant site (10) by a submerged or transmucosal mode.

11. Implant (100) according to one of the preceding claims, **characterised in that** said head (1) comprises a plurality of circular incisions (14), said circular incisions (14) stimulating growing of cortical portion and preventing growing of bacterial flora and its passage from the upper surface of the same cortical (medullar) part to the spongy part of the bone, i.e. medullar part, conferring a better stability of said implant (100).

12. Implant (100) according to one of the preceding claims, **characterised in that** it comprises an acetabulum (9) having a first (9') and a second (9") portion, said acetabulum (9) permitting coupling with said coupling means (12, 13).

13. Implant (100) according to one of the preceding claims, **characterised in that** said coupling means (12, 13) comprise a pin (13) that can be coupled with said acetabulum (9) by cement and that can be housed within said first portion (9').

14. Implant (100) according to one of the preceding claims 12 or 13, **characterised in that** said coupling means (12, 13) comprise a screw (13) that can be introduced between said prosthetic stump (11) and said implant (100), passing through said pin (13).

15. Implant (100) according to one of the preceding claims 12 - 14, **characterised in that** said first portion (9') of said acetabulum (9) has a triangular or hexagonal or octagonal section.

16. Implant (100) according to one of the preceding claims 12 - 15, **characterised in that** said second acetabulum portion (9") has a conical shape.

17. Implant (100) according to claim 1, **characterised in that** said second portion has an inclination between 1.75° and 3° with respect to the vertical axis of said implant (100), so as to make it easier positioning of the same implant (100) and of the prosthetic parts.

18. Implant (100) according to one of the preceding claims, **characterised in that** it receives different kinds of prosthetic parts, straight stumps (11), inclined stumps (11), with passing through tightening screw, straight and inclined stumps (11), with direct screw and straight or inclined stumps to be cemented.
